(19) Europäisches Patentamt
European Patent Office
Office européen des brevets

(11) Publication number: **0 510 549 A1**

(12) **EUROPEAN PATENT APPLICATION**

(21) Application number: **92106704.7**

(22) Date of filing: **17.04.92**

(51) Int. Cl.5: **C08L 69/00**, C08L 55/02, C08L 35/06, C08L 25/04

(30) Priority: **22.04.91 JP 90466/91**

(43) Date of publication of application: **28.10.92 Bulletin 92/44**

(84) Designated Contracting States: **BE CH DE FR GB IT LI NL SE**

(71) Applicant: **IDEMITSU PETROCHEMICAL CO. LTD.**
**1-1, Marunouchi 3-chome Chiyoda-ku**
**Tokyo 100(JP)**

(72) Inventor: **Kozakura, Shiro, c/o Idemitsu Petrochemical**
**Co., Ltd., 1-1, Anesakikaigan**
**Ichihara-shi, Chiba-ken(JP)**
Inventor: **Komatsu, Takashi, c/o Idemitsu Petrochemical**
**Co., Ltd., 1-1, Anesakikaigan**
**Ichihara-shi, Chiba-ken(JP)**

(74) Representative: **Türk, Dietmar, Dr. rer. nat.**
**Türk, Gille, Hrabal, Leifert Patentanwälte**
**Brucknerstrasse 20**
**W-4000 Düsseldorf 13(DE)**

(54) **Polycarbonate resin composition.**

(57) Disclosed is a polycarbonate resin composition which comprises
(a) a polycarbonate having a repeating unit (I) represented by the general formula (A):

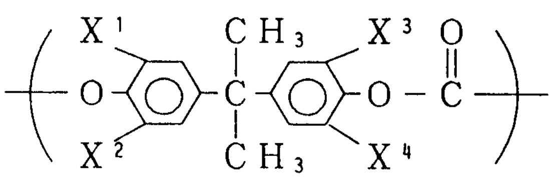

· · · (A)

a repeating unit (II) represented by the formula (B):

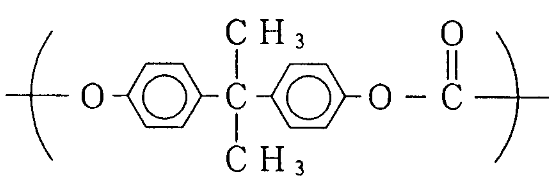

· · · (B)

and a trihalogenophenoxy group represented by the general formula (C):

EP 0 510 549 A1

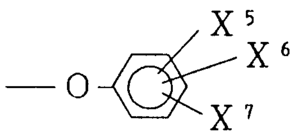

· · · (C)

in the above formulae, $X^1$ to $X^7$ are each a halogen atom), at the terminal of the carbonate; and a specified viscosity average molecular weight and the content of the repeating unit (I), and

(b) styrenic resin.

The polycarbonate resin composition is excellent in mechanical properties, heat resistance, flame retardance, thermostability, rigidity, impact resistance, and fluidity.

## BACKGROUND OF THE INVENTION

1. Field of the Invention

The present invention relates to a polycarbonate resin composition, more particularly, to a polycarbonate resin composition comprising a polycarbonate having a novel structure and a styrenic resin (a styrenic polymer) and is excellent in various physical properties such as mechanical properties, heat resistance, flame retardance, thermostability, rigidity, impact resistance, and fluidity.

2. Description of the Related Arts

As halogen-containing polycarbonate copolymers having flame retardance, various ones have heretofore been known. They include (i) a copolymer of tetrabromobisphenol A (TBA) and bisphenol A (BPA) (Japanese Patent Publication No. 24660/1972), (ii) a copolymer of tetrabromobisphenolsulfone (TBS) and BPA (Japanese Patent Application Laid-Open No. 123294/1976), (iii) a copolymer of tetrabromothiodiphenol (TBTDP) and BPA (Japanese Patent Application Laid-Open No. 99226/1981), (iv) a copolymer of the statistical mixture of halogenated bisphenols and BPA (Japanese Patent Application Laid-Open No. 136796/1976), and (v) a blend of the copolymer of thiodiphenol (TDP) and BPA and the copolymer of above (i) (Japanese Patent Application Laid-Open No. 50065/1979).

These copolymers are obtained by copolymerization of halogenated bisphenols resulted from halogen-substitution of benzene nucleus in bisphenols for the purpose of containing halogen in an amount necessary for a sufficient flame retardance. All of these copolymerization, however, require these halogenated bisphenols in a comparatively large amount, and accordingly, the mechanical strength of the resulting polycarbonate (particularly, impact resistance) is unfavorably lowered.

Another example of halogen-containing polycarbonate is a polycarbonate in which halogenated phenol is used as a terminator (Japanese Patent Publication No. 40715/1971). Said polycarbonate, however, is not provided with both of an excellent flame-retardance and a high mechanical-strength.

In order to overcome above disadvantages, a polycarbonate was produced by a process of copolymerizing BPA, TBA and TDP (Japanese Patent Application Laid-Open No. 140597/1977). According to said process, the resulting polycarbonate is excellent in both of flame retardance and mechanical strength, but is not necessarily sufficient in moldability.

Recently one of the present inventors has succeeded in developing a polycarbonate having a novel structure which is greatly improved in flame retardance, and also is excellent in thermostability at molding while maintaining sufficient mechanical strength and optical properties (Japanese Patent Application Laid-Open No. 200833/1991).

Said novel polycarbonate, however, was found to have a disadvantage in moldability because of its high melt viscosity, although it has physical properties considerably superior to those of the conventional polycarbonates.

Under these circumstances, the present inventors repeated earnest investigation to dissolve the above problems while maintaining the advantages of the above-mentioned novel polycarbonate.

## SUMMARY OF THE INVENTION

The present invention is intended to overcome the above problems and its major object is to develop a polycarbonate resin composition which is excellent in physical properties such as mechanical properties, heat resistance, flame retardance, rigidity, impact resistance, and fluidity.

As the result of the investigations by the present inventors, it was found that blending styrenic resin with said novel polycarbonate improves fluidity of the resulting polycarbonate resin composition while maintaining the mechanical properties originally possessed by polycarbonate. The present invention has been accomplished basing on such a finding.

The present invention provides a polycarbonate resin composition which comprises

(a) 1 to 99% by weight of a polycarbonate having

(i) a repeating unit (I) represented by the general formula (A):

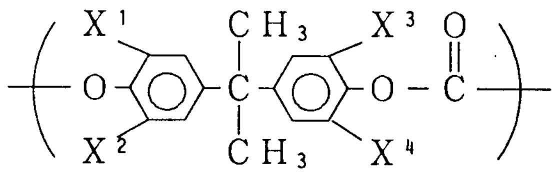 · · · (A)

wherein $X^1$ to $X^4$ are each a halogen atom, (ii) a repeating unit (II) represented by the formula (B):

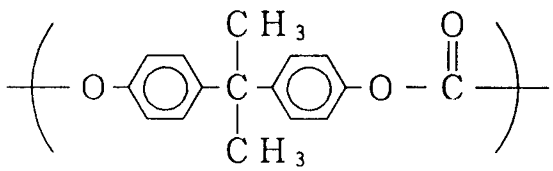 · · · (B)

and (iii) a trihalogenophenoxy group represented by the general formula (C):

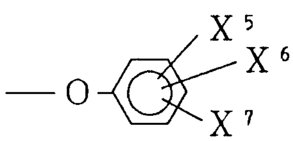 · · · (C)

wherein $X^5$ to $X^7$ are each a halogen atom, as the terminal of the polycarbonate;
and (iv) a viscosity average molecular weight of 10,000 to 50,000, the proportion of the repeating unit (I) in the main chain being 1 to 10 mol %;
and (b) 99 to 1% by weight of styrenic resin.

## DESCRIPTION OF THE PREFERRED EMBODIMENTS

The polycarbonate resin composition of the present invention has (a) polycarbonate and (b) styrenic resin (styrenic polymer) as the main component, as mentioned above. Herein the polycarbonate as component (a) has the repeating unit (I) represented by the above general formula (A) and the repeating unit (II) represented by the formula (B). $X^1$ to $X^4$ in the general formula (A) are each a halogen atom such as a bromine atom, a chlorine atom, and a fluorine atom. Said $X^1$ to $X^4$ may be identical or different, but they are identical in most cases.

The polycarbonate of the present invention has a trihalogenophenoxy group or groups represented by the general formula (C) at the terminal, particularly both terminals of the molecules. $X^5$ to $X^7$ in said general formula (C) also indicate each a halogen atom such as a bromine atom, a chlorine atom, and a fluorine atom, as $X^1$ to $X^4$ described above. $X^1$ to $X^4$ in the repeating unit (I) mentioned above may be identical to or different from $X^5$ to $X^7$ in the general formula (C).

In the polycarbonate of the present invention, the mole fractions of the repeating unit (I) based on the total of the repeating units (I) and (II) in the main chain must be 1 to 10 mol %, preferably 2 to 6 mol %. If the mole fraction of the repeating unit (I) in the main chain is less than 1 mol %, the flame retardance of the resulting polycarbonate is lowered, while if it is in excess of 10 mol %, the mechanical strength of the resulting polycarbonate falls.

As to the polymerization degree of the polycarbonate of the present invention, the viscosity average molecular weight is preferably in the range of 10,000 to 50,000. If the viscosity average molecular weight is less than 10,000, the mechanical strength such as impact resistance is insufficient.

Said polycarbonate has the above-mentioned repeating units (I) and (II), and trihalogenophenoxy group or groups represented by the general formula (C) at the terminal thereof, and includes random copolymer, block copolymer, and alternating copolymer.

The molecular chain of said polycarbonate may contain a small amount of repeating units other than the above repeating units (I) and (II). As the third copolymers to constitute these repeating units, bisphenol sulfone (BPS) or TDP is used. The content of them should be 0 to 20 mol %, preferably 0 to 10 mol %

based on the total amount of BPA and TBA. If the content of it is in excess of 20 mol %, the mechanical strength of the resulting polycarbonate is low.

The polycarbonate as component (a) of the present invention can be produced by various methods. Among them, following two are preferred.

According to the first method, an aqueous alkali solution (e.g., aqueous solution of sodium hydroxide, potassium hydroxide, and sodium carbonate) of tetrahalogenobisphenol A (e.g., tetrabromobisphenol A, tetrachlorobisphenol A, and tetrafluorobisphenol A) represented by the general formula (A')

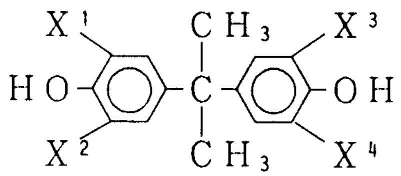

· · · (A')

wherein $X^1$ of $X^4$ are as defined before,
an aqueous alkali solution of bisphenol A (BPA) represented by the formula (B'):

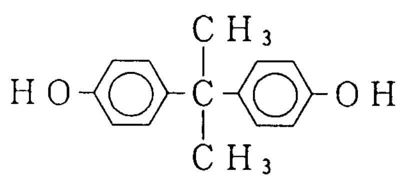

· · · (B') ,

and an aqueous alkali solution of trihalogenophenol (e.g., tribromophenol, trichlorophenol, and trifluorophenol) represented by the general formula (C'):

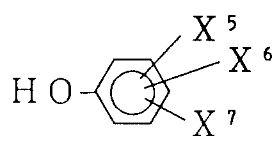

· · · (C')

wherein $X^5$ to $X^7$ are as defined before,
are mixed with a solvent such as methylene chloride, chlorobenzene, pyridine, chloroform, and carbon tetrachloride, and a catalyst such as triethylamine and triethylbenzylammonium chloride, and the resulting mixture is stirred. Then, phosgene is blown into the mixture to proceed with interfacial polycondensation. The reaction system is preferred to be cooled with water or ice since the reaction is exothermic.

In this reaction, the reaction system becomes acidic as the reaction proceeds, so it is preferred to maintain pH at 10 or more by adding alkali while measuring with a pH meter.

In the above reaction, a part (50 mol % or less) of trihalogenophenol can be replaced with a monohydric phenol such as p-tert-butylphenol and phenol, to be used in combination.

In the above polycondensation reaction, tet rahalogenobisphenol A of the formula (A') constitutes the repeating unit (I) of the resulting polycarbonate, and bisphenol A of the formula (B') constitutes the repeating unit (II), so the ratio of above-mentioned tetrahalogenobisphenol A to bisphenol A to be placed is determined depending on the mole fraction of each of the repeating units (I) and (II) of the polycarbonate to be produced, or the proportion of halogen atoms to be contained. On the other hand, the amounts of trihalogenophenol and phosgene introduced specify the polymerization degree of each of the repeating units (I) and (II), further the polymerization degree of whole the polycarbonate, and consequently the molecular weight thereof. Accordingly, the amounts of trihalogenophenol and phosgene to be introduced are determined depending upon the purpose of use.

In blowing phosgene, the rate of phosgene to be blown per hour should be controlled so that a sufficient amount of phosgene might have been introduced at the completion of the reaction.

When the reaction product obtained in this way is introduced into a large amount of a precipitant such as methanol, then the polycarbonate as component (a) of the composition of the present invention is precipitated out.

In the above reaction, various carbonate-forming compound derivatives such as bromophosgene, diphenyl carbonate, di-p-tolyl carbonate, phenyl-p-tolyl carbonate, di-p-chlorophenyl carbonate and dinaphthyl carbonate can be used in place of phosgene.

According to the second method, a polycarbonate oligomer is prepared in advance from bisphenol A and phosgene; the oligomer thus obtained, an aqueous alkali solution of tet rahalogenobisphenol A and an aqueous alkali solution of trihalogenophenol, a solvent such as methylene chloride which is capable of dissolving said oligomer, and further a catalyst such as triethylamine and trimethylbenzylammonium chloride are mixed in prescribed ratios and stirred to be prepolymerized; and subsequently an aqueous alkali solution of bisphenol A and, if necessary, p-tert-butylphenol are added to proceed with polycondensation reaction. The resulting reaction product is poured into a large amount of a precipitant (e.g., methanol), and then the polycarbonate as component (a) of the composition of the present invention is precipitated out.

The polycarbonate as component (a) of the composition of the present invention can be efficiently produced by the above-mentioned methods. In addition, also following methods are suitably used.

(i) Tetrahalogenobisphenol A and phosgene are reacted to prepare a polycarbonate oligomer in advance, and said oligomer is reacted with bisphenol A and trihalogenophenol in the presence of a solvent, an aqueous alkali solution, and a catalyst which are suitable for the reaction;

(ii) a polycarbonate oligomer prepared from bisphenol A (or tetrahalogenobisphenol A) and phosgene is reacted with tetrahalogenobisphenol A (or bisphenol A) and trihalogenophenol in the presence of a solvent, an aqueous alkali solution, a catalyst and so forth which are suitable for the reaction, and in that process, phosgene is blown in the reaction system;

(iii) an oligomer is prepared from bisphenol A and phosgene, and an oligomer is prepared from tetrahalogenobisphenol A and phosgene, and these two kinds of oligomers are reacted in the presence of trihalogenophenol and a solvent, an aqueous alkali solution, a catalyst and so forth which are suitable for the reaction; and

(iv) in the above method, a multi-stage polymerization, in which polymerization is carried out at two or more stages, is effectively employed.

The above-mentioned polycarbonate can be obtained according to any of these methods.

The polycarbonate as component (a) of the composition of the present invention has a viscosity average molecular weight of 10,000 to 50,000, preferably 13,000 to 50,000, as described above. In order to control the viscosity average molecular weight to be in that range, the amount of trihalogenophenol mainly used as the molecular weight controlling agent is appropriately selected. Usually, the amount of trihalogenophenol is in the ratio of 0.01 to 0.1 (mole) based on the amount of diphenols which constitute the main chain.

In adding BPA, an aqueous alkali solution and catalyst such as triethylamine to polycarbonate oligomer, to produce polycarbonate by interfacial polycondensation, the ratio of catalyst to diphenols should be usually 0.0005 to 0.03 (mol/mol).

When BPA, an aqueous alkali and a catalyst such as triethylamine added to polycarbonate oligomer to produce a polycarbonate by interfacial polycondensation, the amount of caustic alkali should be usually in the ratio of 0.1 to 5.0 (mol/mol) to the amount of diphenols (mol/mol).

Styrenic resins as component (b) of the present invention include polystyrene resin, high impact resistant polystyrene resin (HIPS), styrene-maleic anhydride copolymer, and acrylonitrile-butadiene-styrene (ABS) resin.

Examples of the above-mentioned polystyrene resin are polymers of styrene, $\alpha$-methylstyrene, vinyltoluene, 2,4-dimethylstyrene, chlorostyrene, and other substituted monovinyl aromatic monomers.

High impact resistant polystyrene resin is a polymer obtained by dissolving or mixing a rubber-like elastomer in a monovinyl aromatic monomer, and then polymerizing them. Specific examples of these rubber-like elastomer are polybutadiene, rubber-like elastomer containing acrylate and/or methacrylate, styrene-butadiene-styrene (SBS) resin, acrylonitrile-butadiene-styrene (ABS) rein, acrylonitrile-styrene (AS) resin, styrene-butadiene rubber (SBR), butadiene-acryl rubber, isoprene rubber, isoprene-styrene rubber, isoprene-acryl rubber, and ethylene-propylene rubber. Among them, polybutadiene is particularly preferred. The polybutadiene as used herein may be low cis-polybutadiene (e.g., containing 1 to 30 mol% of 1,2-vinyl bond and 30 to 42 mol% of 1,4-cis bond), or high cis-polybutadiene (e.g., containing less than 20 mol% of 1,2-vinyl bond and not less than 78 mol% of 1,4-cis bond), or a mixture thereof.

In the styrene-maleic anhydride copolymer, the ratio of styrene and maleic anhydride can be varied within a wide range, and the molecular weight can also be chosen from a wide range. Styrene-maleic anhydride copolymer can generally be produced by reacting maleic anhydride and styrene at an elevated temperature in the presence of a peroxide catalyst (see U.S. Patents 2,866,771 and 2,971,939). Said

styrene-maleic anhydride copolymer can contain α-methylstyrene, vinyltoluene, 2,4-dimethylstyrene, chlorostyrene, and other substituted styrene derivatives, in place of styrene. The molecular weight of said styrene-maleic anhydride copolymer can vary in a wide range, and is chosen preferably from 20,000 to 300,000 and more preferably from about 80,000 to 200,000, for instance. The maleic anhydride content of styrene-maleic anhydride copolymer is preferably 5 to 50% by weight, more preferably 5 to 30% by weight, and most preferably 8 to 15% by weight. Herein styrene-maleic anhydride copolymer means a copolymer obtained by heat polymerizing styrene and maleic anhydride using a rubber component in the presence of a chain transfer agent and a radical generator.

Typical examples of the rubber components are a butadiene rubber, butadiene-styrene rubber or butadiene-acryl rubber containing 60 to 95% by weight of butadiene, isoprene rubber, isoprene-styrene rubber or isoprene-acryl rubber containing 60 to 95% by weight of isoprene, A-B type block rubber or A-B-A type block rubber of butadiene-styrene containing 60 to 95% by weight of butadiene, and ethylene-propylene copolymer rubber (EPT). These can be used alone or in combination with one another. Rubber-modified copolymer resin obtained finally preferably contains 2 to 25% by weight, more preferably 5 to 12% by weight of the above-mentioned rubber component.

ABS resins to be used in the present invention are graft polymers prepared by polymerizing, in the presence of conjugated diene-based rubber, two or more compounds selected from an aromatic vinyl monomer, a vinyl cian monomer and an unsaturated carboxylic acid alkyl ester monomer by the known polymerizing method such as emulsion polymerization, bulk polymerization, bulk-suspension polymerization, and emulsion-bulk polymerization. Said graft polymers can include ungrafted copolymer produced at graft polymerization, and copolymers produced from two or more kinds of the above-mentioned compounds prepared separately.

The ratios of the components in the ABS resin are not particularly limited, but in order to make the physical properties of the final composition valuable in practical use, it is preferred that 5 to 70% by weight of conjugated diene-based rubber, 70 to 20% by weight of aromatic vinyl monomer, and 10 to 50% by weight of vinyl cian monomer and/or unsaturated carboxylic acid alkyl ester monomer are composed.

The conjugated diene-based rubber which constitutes ABS resin includes polybutadiene, butadiene-styrene copolymer, butadiene-acrylonitrile copolymer, and polyisoprene, and combination use of them involves no problem. Aromatic vinyl monomer includes styrene, α-methylstyrene, and p-methylstyrene.

Vinyl ciano monomer includes acrylonitrile, and methacrylonitrile, and unsaturated carboxylic acid alkyl ester monomer includes methyl acrylate, ethyl acrylate, methyl methacrylate and hydroxyethyl acrylate.

The polycarbonate resin composition of the present invention comprises component (a) and component (b) as the main components. Proportions of these two components can be selected properly in the range in which the polycarbonate as component (a) is 1 to 99% by weight, preferably 30 to 95% by weight, and the proportion of the styrenic resin as component (b) is 99 to 1% by weight, preferably 70 to 5% by weight. If the proportion of the polycarbonate as component (a) is more than 99% by weight, the resulting composition is not provided with a sufficient fluidity and solvent resistance. On the other hand, if it is less than 1% by weight, sufficient flame retardance is not obtained.

To the polycarbonate resin composition of the present invention, various inorganic fillers, additives, other synthetic resins, elastomer and the like, besides components (a) and (b) above, can be added if necessary, as far as the purpose of the present invention is not inhibited.

Examples of the inorganic fillers blended for the purpose of increasing the mechanical strength and durability or volume of the polycarbonate resin composition are as glass fiber (GF), glass beads, glass flake, carbon black, calcium sulfate, calcium carbonate, calcium silicate, titanium oxide, alumina, silica, asbestos, talc, clay, mica, and quartz powder.

Further, as the above-mentioned additives, antioxidants such as hindered phenol-based, phosphorus (phosphite and phosphate)-based, and amine-based antioxidants; ultraviolet ray absorbers such as benzotriazol-based and benzophenone-based ones; external lubricants such as aliphatic carboxylate-based and paraffinic lubricants: releasing agents; antistatic agents; and colorants can also be added.

As the above hindered phenol-based antioxidant, "BHT" (2,6 di-tert-butyl-p-cresol), "IRGANOX 1076" and "IRGANOX 1010" (trade name, produced by Ciba Geigy Corp.), "Ethyl 330" (trade name, produced by Ethyl Corp.), "Sumilizer GM" (trade name, produced by Sumitomo Chemical Co., Ltd.), and the like are preferably used.

Other synthetic resins such as polyethylene, polypropylene, polymethyl methacrylate, and polycarbonates other than the polycarbonate as component (a) can also be added. Examples of elastomers are isobutylene-isoprene rubber, styrene-butadiene rubber, ethylene-propylene rubber, and acrylic elastomer.

The polycarbonate resin composition of the present invention is prepared by blending and kneading the aforementioned components by a usual method, such as by the use of a ribbon blender, a Henschel mixer,

a Bumbury mixer, a drum tumbler, a single-screw extruder, a twin-screw extruder, co-kneader, a multi-screw extruder and the like.

Preferable heating temperature in kneading is usually 250 to 300 °C.

As described above, in the polycarbonate resin composition of the present invention, mechanical properties and flame retardance are maintained and, in addition, fluidity is largely improved compared with the compositions obtained by blending styrene-based resin with a usual polycarbonate. Moreover, the resin composition of the present invention is excellent in heat resistance and flame retardance.

Accordingly, the polycarbonate resin composition of the present invention thus obtained can be molded by various known molding methods such as hollow molding, injection molding, extrusion molding, vacuum molding, blow molding, heat bending molding, compression molding, calender molding, rotary molding and the like to produce moldings for parts of electric and electronic appliances, office automation appliances and cars, particularly parts for rotating part, transferring part, and driving part. Among the above methods of molding, hollow molding, extrusion molding, vacuum molding and blow molding of sheet film, compression hollow molding, and heat bending molding are preferred.

The present invention is described in greater detail with reference to the following examples.

Reference Example

(Preparation of Polycarbonate Oligomer of Bisphenol A)

In a 2-liter flask euipqqed with a stirrer, 91 g of bisphenol A (BPA), 330 ml of methylene chloride and 560 ml of 2.0 N aqueous solution of sodium hydroxide were placed, and stirred, and then phosgene was blown into the resulting mixture over 70 minutes while stirring and cooling on water bath. The reaction mixture was allowed to stand at room temperature, then a methylene chloride solution of oligomer was isolated as a lower layer. The oligomer has a concentration of 320 g/ℓ, a number average molecular weight of 850, and a concentration of the chloroformate group of 0.7 mol/ ℓ.

Preparation Example 1

In a 50-liter reactor equipped with stirrer, 10ℓ of polycarbonate oligomer prepared in the above Reference Example, 1.8ℓ of an aqueous sodium hydroxide solution of tetrabromobisphenol A (TBA) and tribromophenol (TBP) (consisting of 250 g (0.460 mol)of TBA, 150 g (0.453 mol) of TBP, 78.6 g (1.96 mol) of sodium hydroxide and 1.35ℓ of water) and 1.8 ml (0.013 mol) of triethylamine were placed in, and stirred at 500 rpm. After 60 minutes, 3.9ℓ of an aqueous sodium hydroxide solution of BPA (consisting of 457 g (2.00 mol) of BPA, 267 g (6.68 mol) of sodium hydroxide and 3.42ℓ of water) and 6.1ℓ of methylene chloride were added, and the resulting mixture was stirred.

After stirred for 60 minutes, the reaction product was separated into aqueous layer and methylene chloride layer containing the copolymer formed.

This methylene chloride layer was washed with water, an acid (0.1 N hydrochloric acid), and then with water. From the methylene chloride layer, methylene chloride was removed under reduced pressure at 40 °C to obtain a white powder of copolymer. This white copolymer was dried at 120 °C for one day and night, and then melted by the use of an extruder to be pelletized. The glass transition temperature (Tg) of the pellet was 152.6 °C. The viscosity average molecular weight was 23,900, and the distribution of molecular weight was measured by the use of gel permeation chromatography, a distribution having a single peak at the abovementioned value was shown. An NMR analysis showed that the content of TBA (repeating unit (I)) in the main chain in this copolymer was 3.1 mol %.

Subsequently, said pellets were injection-molded at 300 °C and under the injection pressure of 55 $kg/cm^2$ in an injection molder to obtain a test piece. The test piece was measured for Izod impact strength and flame retardance. The flow value of the pellet was measured by Koka-type flow tester.

The bromine content of the resulting pellet was 6.4% by weight. The bromine content was determined by alkali-decomposition of the sample, and analyzed by the Volhard method.

Further, the test on thermostability at molding was conducted as follows. The pellet was injection-molded to stay at 300 °C for 30 minutes, and then, test sample was formed. The resulting test piece was determined for yellowness index (YI) by the use of a transmission-type photometer.

The results are shown in Table 1.

Preparation Examples 2 and 3

The procedure of Preparation Example 1 was repeated except that aqueous sodium hydroxide solution of TBA and TBP was altered as shown in Table 1. The results are shown in Table 2.

Preparation Example 4

The procedure of Example 1 was repeated except that the aqueous sodium hydroxide solution of TBA and TBP was altered as shown in Table 1. The results are shown in Table 2.

Preparation Example 5

The procedure of Example 1 was repeated except that the aqueous sodium hydroxide solution of TBA and TBP was altered as in Table 1. The results are shown in Table 2.

Table 1

| | Content of Each Component in Aqueous Sodium Hydroxide Solution of TBA and TBP (g) | | | | | |
|---|---|---|---|---|---|---|
| | TBA | BPS | TDP | TBP | PTBP | NaOH |
| Preparation Example 1 | 250 | - | - | 150 | - | 78.6 |
| Preparation Example 2 | 391 | - | - | 150 | - | 102.4 |
| Preparation Example 3 | 247 | - | - | 179 | - | 85.0 |
| Preparation Example 4 | 180 | 74 | - | 179 | - | 109.2 |
| Preparation Example 5 | 180 | - | 161 | 179 | - | 162.3 |

Table 2

| | Composition of Copolymer In Main Chain (mol%) | | | | Content of TBP | Whole Content of Bromine*1 |
|---|---|---|---|---|---|---|
| | BPA | TBA | BPS | TDP | (mol%) | (wt%) |
| Preparation Example 1 | 96.9 | 3.1 | 0 | 0 | 3.0 | 6.4 |
| Preparation Example 2 | 95.1 | 4.9 | 0 | 0 | 2.9 | 8.4 |
| Preparation Example 3 | 96.7 | 3.3 | 0 | 0 | 3.8 | 7.3 |
| Preparation Example 4 | 95.5 | 2.4 | 2.1 | 0 | 3.9 | 6.4 |
| Preparation Example 5 | 92.3 | 2.5 | 0 | 5.2 | 3.8 | 6.5 |

Table 2 (continued-1)

| | Viscosity Average Molecular Weight*2 | Flow Value*3 (ml/sec) | Izod Impact Resistance*4 (kg-cm/cm) |
|---|---|---|---|
| Preparation Example 1 | 23,900 | $2.4 \times 10^{-2}$ | 88 |
| Preparation Example 2 | 23,700 | $2.6 \times 10^{-2}$ | 57 |
| Preparation Example 3 | 19,300 | $6.3 \times 10^{-2}$ | 54 |
| Preparation Example 4 | 19,300 | $5.6 \times 10^{-2}$ | 52 |
| Preparation Example 5 | 19,700 | $5.9 \times 10^{-2}$ | 72 |

Table 2 (continued-2)

| | Combustion*5 (1/16") | Thermostability at Molding*6 (YI) |
|---|---|---|
| Preparation Example 1 | V-0 | 8 |
| Preparation Example 2 | V-0 | 9 |
| Preparation Example 3 | V-0 | 10 |
| Preparation Example 4 | V-0 | 10 |
| Preparation Example 5 | V-0 | 9 |

*1 The bromine content derived from TBA and TBP in the whole polycarbonate was calculated out. The amount of the bromine contained in the polymer was determined by alkali-decomposing a sample and then by an analysis according to the Volhard method.

*2 The viscosity average molecular weight (Mv) was determined by calculation from a viscosity of a methylene chloride solution as measured at 20°C by the use of Ubbellohde viscometer.

*3 The flow value was measured according to JIS K-7210 (load: 160 kg/$cm^2$).

*4 The Izod Impact Resistance was measured according to JIS K-7110 using a test piece of 1/8 inch in thickness.

*5 Measured according to UL-94 (Vertical Combustion Test according to Underwriter's Laboratories Subject 94) using a test piece of 1/16 inch in thickness.

*6 The thermostability at molding was determined by keeping the injection-molded pellet at 300°C for 30 minutes, to form a test piece, then the Yellowness Index (YI) of the test piece was judged by a transmission-type photometer.

Examples 1 to 16 and Comparative Examples 1 to 4

Each prescribed amount of polycarbonate, styrenic resin and other additives were premixed in a drum tumbler, and the resulting mixture was supplied into an extruder, kneaded at 250 °C, and pelletized. The pellet obtained was dried at 120°C for 6 hours, and then injection-molded at a die temperature of 80°C to obtain a test piece. The resulting test piece was determined for tensile strength, Izod impact strength, flow value, and combustion property. The results are shown in Table 3.

Table 3

| | Polycarbonate | | Styrenic Resin | |
|---|---|---|---|---|
| | Kind | Proportion | Kind | Proportion |
| Example 1 | PC-1 | 50 | ABS | 50 |
| Example 2 | PC-2 | 50 | ABS | 50 |
| Example 3 | PC-3 | 50 | ABS | 50 |
| Example 4 | PC-4 | 50 | ABS | 50 |
| Example 5 | PC-5 | 50 | ABS | 50 |
| Example 6 | PC-1 | 70 | ABS | 30 |
| Example 7 | PC-1 | 70 | HISMA | 30 |
| Example 8 | PC-1 | 30 | HISMA | 70 |
| Example 9 | PC-2 | 80 | GPSMA | 20 |
| Example 10 | PC-1 | 90 | GPPS | 10 |
| Example 11 | PC-2 | 90 | HIPS | 10 |
| Preparation Example 1 | PC-6 | 100 | - | - |
| Preparation Example 2 | PC-1 | 100 | - | - |
| Preparation Example 3 | PC-6 | 50 | ABS | 50 |
| Preparation Example 4 | PC-1 | 70 | HISMA | 30 |

Table 3 (continued-1)

| | Evaluation | | | |
|---|---|---|---|---|
| | Tensile Strength ($kg/cm^2$) | Izod Impact Strength (kg-cm/cm) | Flow Value (ml/sec) | Combustion |
| Example 1 | 520 | 82 | $32 \times 10^{-2}$ | V-2 |
| Example 2 | 510 | 77 | $32 \times 10^{-2}$ | V-2 |
| Example 3 | 520 | 70 | $32 \times 10^{-2}$ | V-2 |
| Example 4 | 530 | 72 | $40 \times 10^{-2}$ | V-2 |
| Example 5 | 520 | 70 | $40 \times 10^{-2}$ | V-2 |
| Example 6 | 550 | 83 | $20 \times 10^{-2}$ | V-2 |
| Example 7 | 550 | 85 | $40 \times 10^{-2}$ | V-2 |
| Example 8 | 530 | 50 | $65 \times 10^{-2}$ | HB |
| Example 9 | 620 | 82 | $24 \times 10^{-2}$ | V-2 |
| Example 10 | 640 | 80 | $24 \times 10^{-2}$ | V-2 |
| Example 11 | 610 | 82 | $20 \times 10^{-2}$ | V-2 |
| Comparative Example 1 | 770 | 91 | $5.7 \times 10^{-2}$ | V-2 |
| Comparative Example 2 | 780 | 88 | $2.4 \times 10^{-2}$ | V-0 |
| Comparative Example 3 | 490 | 77 | $28 \times 10^{-2}$ | HB |
| Comparative Example 4 | 540 | 82 | $32 \times 10^{-2}$ | HB |

Table 3 (continued-2)

| | Amount Blended | | | |
|---|---|---|---|---|
| | Base | wt% | Additive | wt% |
| Example 12 | Example 1 | 90 | GF | 10 |
| Example 13 | Example 1 | 100 | Antioxidant | 100* |
| Example 14 | Example 6 | 99.5 | Lubricant | 0.5 |
| Example 15 | Example 7 | 95 | Flame Retardance | 5 |
| Example 16 | Example 11 | 90 | CF | 10 |

* PPM

Table 3 (continued-3)

| | Evaluation | | | |
|---|---|---|---|---|
| | Tensile Strength ($kg/cm^2$) | Izod Impact Strength (kg-cm/cm) | Flow Value (ml/sec) | Combustion |
| Example 12 | 1100 | 13 | $24 \times 10^{-2}$ | V-2 |
| Example 13 | 520 | 82 | $33 \times 10^{-2}$ | V-2 |
| Example 14 | 540 | 81 | $22 \times 10^{-2}$ | V-2 |
| Example 15 | 550 | 82 | $21 \times 10^{-2}$ | V-0 |
| Example 16 | 1500 | 15 | $20 \times 10^{-2}$ | V-2 |

Notes:

(1) Kind of Polycarbonate

PC-1 to PC-5: Polycarbonate prepared in Preparation Examples 1 to 5, respectively.

PC-6: Toughlon A 2200 (polycarbonate produced from bisphenol A) produced by Idemitsu Petrochemical Co., Ltd.

(2) Kind of Styrenic Resin

ABS : ABS resin consisting of 28% by weight of butadiene, 24% by weight of acrylonitrile, and 48% by weight of styrene.

HISMA : DYLARK D-250 (high impact resistant copolymer of styrene-maleic anhydride), produced by Atlactic Richfield Co., Ltd., USA.

GPSMA : MOREMAX UG-430 (styrene-maleic anhydride copolymer), produced by Idemitsu Petrochemical Co., Ltd.

GPPS : Idemitsu Styrol HH30 (general purpose polystyrene), produced by Idemitsu Petrochemical Industry Co., Ltd.

HIPS : Idemitsu Styrol HH52 (impact resistant polystyrene), produced by Idemitsu Petrochemical Co., Ltd.

(3) Other Additives

GF : MA 409 C (glass fiber having a diameter of 13 μm, and a length of 3 mm), produced by Asahi Fiber Glass Co., Ltd.

Antioxidant : tris(nonylphenyl)phosphite

Lubricant : Rikemal S 100A (stearic acid monoglyceride) produced by Riken Vitamin Co., Ltd.

CF : Carbon Fiber, trade name : Besfite HTA-C 6-S, produced by Toho Rayon Co., Ltd.

Flame Retardant : BC-58 (TBA oligomer), produced by Great Lakes, Ltd.

(4) Test Method

Tensile Strength : According to JIS K-7113

Flow Value : According to JIS K-7210 (temperature : 280℃, load : 160 $kg/cm^2$)

Combustion : According to UL-94 (1/16 inch in thickness, notched, measured at 23℃)

Izod Impact Value : According to JIS K-7110 (1/8 inch in thickness, notched, measured at 23℃)

(5) Proportion of Components

The proportions of polycarbonate and styrenic resin are percent (% by weight) based on the total amount of the two components, and the proportions of other additives are shown by parts by weight based on the total amount of polycarbonate and styrenic resin as 100 parts by weight.

## Claims

1. A polycarbonate resin composition which comprises (a) 1 to 99% by weight of a polycarbonate having (i) a repeating unit (I) represented by the general formula (A):

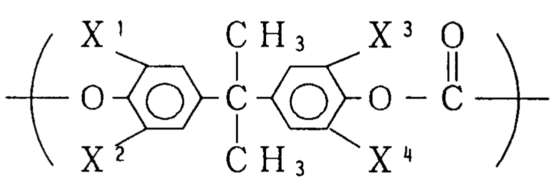

· · · (A)

wherein $X^1$ to $X^4$ are each a halogen atom,
(ii) a repeating unit (II) represented by the formula (B):

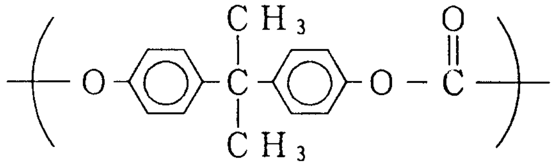

· · · (B)

and (iii) a trihalogenophenoxy group represented by the general formula (C):

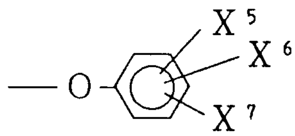

· · · (C)

wherein $X^5$ to $X^7$ are each a halogen atom, at the terminal of the carbonate; and
(iv) a viscosity average molecular weight of 10,000 to 50,000, the proportion of the repeating unit (I) in the main chain being 1 to 10 mol %; and
(b) 99 to 1% by weight of styrenic resin.

**2.** The polycarbonate resin composition according to Claim 1, wherein $X^1$ to $X^7$ are each a bromine atom.

**3.** The polycarbonate resin composition according to Claim 1, comprisig (a) 30 to 95% by weight of the polycarbonate and (b) 70 to 5% by weight of the styrenic resin.

**4.** The polycarbonate resin composition according to Claim 1, wherein the styrenic resin is a general purpose polystyrene, a high impact resistant polystyrene, an acrylonitrile-butadiene-styrene copolymer or a styrene-maleic anhydride copolymer.

European Patent Office

# EUROPEAN SEARCH REPORT

Application Number

EP 92106704.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US - A - 3 855 277 (FOX) * Claims 1,2,4-7; examples 1,2,5,6 * | 1-4 | C 08 L 69/00<br>C 08 L 55/02<br>C 08 L 35/06<br>C 08 L 25/04 |
| A | GB - A - 857 430 (FARBENFABRIKEN BAYER) * Examples 7,8,5; claims 1,3,10; page 4, lines 1-10 * | 1,2 | |
| A | US - A - 4 879 329 (HONGO et al.) * Abstract; claims 4-6 * | 1-4 | |

TECHNICAL FIELDS SEARCHED (Int. Cl.5)

C 08 L 69/00
C 08 L 55/00
C 08 L 25/00
C 08 L 35/00
C 08 G 64/00

The present search report has been drawn up for all claims

| Place of search | Date of completion of the search | Examiner |
|---|---|---|
| VIENNA | 24-07-1992 | SEIRAFI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)